# EUROPÄISCHE PATENTSCHRIFT

(11) **EP 2 923 088 B1**
(45) Veröffentlichungstag und Bekanntmachung des Hinweises auf die Patenterteilung: **08.06.2016**
(21) Anmeldenummer: 14758292.8
(22) Anmeldetag: 25.08.2014
(51) Int. Cl.: F15B 15/08, F15B 15/14

(54) **HYDRAULISCHE STELLVORRICHTUNG**
HYDRAULIC POSITIONER
DISPOSITIF DE RÉGLAGE HYDRAULIQUE

(30) Priorität: 26.08.2013 DE 102013014033
(43) Veröffentlichungstag der Anmeldung: 30.09.2015
(73) Patentinhaber: Hägele GmbH, 73614 Schorndorf (DE)
(72) Erfinder: HÄGELE, Karl, 73614 Schorndorf (DE); LECHLER, Markus, 73614 Schorndorf (DE)
(74) Vertreter: Müller, Gottfried
(86) Internationale Anmeldenummer: PCT/EP2014/002315
(87) Internationale Veröffentlichungsnummer: WO 2015/028136

(56) Entgegenhaltungen:
- WO-A1-2011/072381
- DE-A1- 19 839 142
- JP-A- S5 686 210
- US-A- 3 293 994
- US-A1- 2009 196 747

## Beschreibung

Die Erfindung betrifft eine hydraulische Stellvorrichtung gemäß dem Oberbegriff des Anspruches 1.

Aus der US 3 293 994 A ist eine solche hydraulische Stellvorrichtung in Form eines Hydraulik-Stellzylinders mit einem geschlossenen Arbeitsraum bekannt, eingegrenzt durch eine umfangsseitige Zylinderwand und zur Zylinderwand lagefeste Stirnwände als Begrenzungselemente. Im Arbeitsraum ist ein axial verschiebbarer Stellkolben aufgenommen. Die Kolbenstange des Stellkolbens durchsetzt abgedichtet eine der Stirnwände zum Arbeitsraum. Diese Stirnwand ist zur Zylinderwand, über ein Dichtungspaar mit axial zwischen den Dichtungen liegendem Ringraum abgedichtet, lagefest angeordnet.

Die von der Kolbenstange durchsetzte Stirnwand umschließt einen Ringraum um die Kolbenstange, in dem ein Ringkolben liegt. Dieser Ringkolben ist zur Kolbenstange und zur Stirnwand jeweils abgedichtet und wegbegrenzt axial verschieblich angeordnet. Letzteres gegenüber der Stirnwand durch an der Stirnwand vorgesehene und zum Ringkolben stirnseitig liegende, axial beabstandete Anschläge. In Richtung auf den den Verstellweg des Ringkolbens in Ausfahrrichtung der Kolbenstange begrenzenden Anschlag ist der Ringkolben über eine Federanordnung abgestützt. Diese Federanordnung liegt umschließend zur Kolbenstange in einem durch die axiale Verstellung des Ringkolbens volumenveränderlichen Ringraum, der axial durch den Ringkolben und eine Stirnfläche der von der Kolbenstange durchsetzten Stirnwand abgegrenzt ist. Dieser volumenveränderliche, radial innere Ringraum und der zwischen den Dichtungen liegende, radial äußere Ringraum bilden jeweils einen Leckagesammelraum und sind über radial die Stirnwand durchsetzende Übergangskanäle verbunden.

Die Kolbenstange ist in ihrem über den Ringkolben axial hinausragenden, betätigungsseitigen Endbereich mit einem Anschlag versehen, der in Einfahrrichtung der Kolbenstange deren Verstellweg gegenüber dem Ringkolben begrenzt und beim Einfahren der Kolbenstange den Ringkolben entgegen der Stellkraft der Federanordnung in Richtung auf die Stirnfläche der durchsetzten Stirnwand mitnimmt.

Die über die Übergangskanäle verbundenen Leckagesammelräume sind über eine entgegen der Rücklaufrichtung auf den Arbeitsraum federbeaufschlagt sperrende Ventilanordnung an einen Rücklaufkanal zum Arbeitsraum angeschlossen. Über die Ventilanordnung wird die Leckage, die, ungeachtet der Dichtungen, zwischen der von der Kolbenstange durchsetzten Stirnwand und der Zylinderwand einerseits und zwischen dieser Stirnwand und der Kolbenstange andererseits auf den Leckagesammelraum übertritt, mittels des von der einfahrenden Kolbenstange mitgenommenen Ringkolbens auf den Arbeitsraum zurückgepumpt, so dass nur ein durch die verschiebbare, abgedichtete Führung zwischen dem Ringkolben und der Kolbenstange gebildeter Leckpfad verbleibt.

Neben solchen komplexen Stellvorrichtungen sind auch einfache, durch einen hydraulischen Stellzylinder mit im Zylinder längsverschieblich abgedichtet angeordnetem Kolben bekannt, bei denen die durch die hydraulische Beaufschlagung des Kolbens jeweils aufgebrachten Stellkräfte über eine Kolbenstange nach außen übertragen werden, die zum Zylinder über eine zylinderseitige Dichtungsanordnung abgedichtet ist. Als Dichtungsanordnung finden hierbei meist einfache Stangendichtungen Verwendung. Auch die Verwendung komplexer Tandemdichtungen ist bekannt, welche zur weitgehendsten Vermeidung von Leckagen auch als gegen den Arbeitsraum rückfördernde Dichtungen ausgebildet sind.

Abgesehen davon, dass solche rückfördernden Tandemdichtungsanordnungen für die angestrebte Rückförderwirkung funktionsbedingt eine axiale Bewegung zwischen den den Dichtspalt als Leckpfad begrenzenden Elementen bedingen, wie etwa zwischen Kolbenstange und Zylinder, ergeben sich Leckpfade nicht nur zwischen gegeneinander axial bewegten Teilen, sondern auch zwischen drehenden Teilen oder lagefest miteinander verbundenen Teilen. Fallweise ergibt sich hieraus, insbesondere bei in Bezug auf Leckagen kritischen Umgebungsverhältnissen, die Forderung, solche Leckagen, auch wenn sie geringfügiger Natur sind, durch entsprechende Hilfsmaßnahmen zu unterdrücken oder hinsichtlich ihrer negativen Auswirkungen doch weitmöglichst zu vermeiden.

Der Erfindung liegt die Aufgabe zugrunde, bezogen auf komplexere Stellvorrichtungen der im Oberbegriff des Anspruches 1 umrissenen Art eine konstruktiv einfache Möglichkeit aufzuzeigen, um auch über unvermeidbare Leckagepfade laufende Leckagen ohne negative Auswirkungen auf die Funktionen der Stellvorrichtung zu beseitigen.

Gemäß der Erfindung wird hierzu bei hydraulischen Stellvorrichtungen mit in längs einer axialen Führungsbahn abgedichtet gegeneinander beweglichen Teilen als Begrenzungselementen zu einem Arbeitsraum in der einen Leckpfad bildenden Führungsbahn eine Dichtungsanordnung mit Rückförderwirkung angeordnet und es wird die Rückförderwirkung dieser Dichtungsanordnung genutzt, um auch anderweitig in der Vorrichtung auftretende Leckagen durch die Verbindung der jeweiligen Leckpfade, oder von zu diesen vorgesehenen Leckagesammelräumen, mit der rückfördernden Dichtungsanordnung in den Hydraulikkreislauf der Stellvorrichtung zurückzuführen.

Die Zusammenführung solcher Leckagen auf die rückführende Dichtungsanordnung erfolgt über einen oder mehrere Übergangskanäle, die mit der rückfördernden Dichtungsanordnung, den Leckagepfaden und Leckagesammelräumen einem Begrenzungselement, in Form eines einstückigen oder gebauten Bauteils der Vorrichtung, zugeordnet vorgesehen sind. Insbesondere ist eine solche Ausgestaltung von Vorteil, wenn bei drehbarer Anordnung der Stellvorrichtung diesem Begrenzungselement auch der zur Versorgung des Arbeitsraumes erforderliche Versorgungseinsatz zugeordnet ist.

Als Begrenzungselemente sind bei der erfindungsgemäßen Stellvorrichtung ein topfförmiger Ringkolben und ein Napfkörper mit zentralem, vom Ringkolben überdeckten Dom vorgesehen, so dass der Arbeitsraum axial zwischen dem Topfboden des Ringkolbens und dem zentralen Dom des Napfkörpers ausgebildet ist. Solche Anordnungen eignen sich in besonderer Weise bei gleichbleibendem Grundaufbau für unterschiedlich einsetzbare Stellvorrichtungen.

Die Zusammenführung der anfallenden Leckagen zur gemeinsamen Rückförderung auf den Arbeitsraum, und damit auf den Hydraulikkreis über eine rückfördernde Dichtungsanordnung erweist sich insbesondere dann als zweckmäßig, wenn die Zuführung der Leckage auf die rückfördernde Dichtungsanordnung fliehkraftunterstützt oder auch über ein Gefälle erfolgt. Ferner auch, wenn als rückfördernde Dichtungsanordnung gegebenenfalls solche Dichtungsanordnungen eingesetzt sind, über die sich ein zusätzlicher Saugeffekt ergibt.

Im Rahmen der Erfindung genutzte Dichtungsanordnungen mit im Leckpfad axial zueinander beabstandeten Dichtungen sind insbesondere sogenannte Tandemdichtungen, wobei der axial zwischen den beabstandeten Dichtungen liegende Raum als Leckagesammelraum dient, auf den der oder die Übergangskanäle münden.

Als besonders vorteilhaft erweist sich die Erfindung in Verbindung mit hydraulischen, axialen Stellvorrichtungen, bei denen ein Arbeitsraum über axial gegeneinander verschiebbare Begrenzungselemente volumenveränderlich begrenzt ist und die Begrenzungselemente mit dem Arbeitsraum eine zur Verschiebungsrichtung der Begrenzungselemente koaxiale Dreheinheit bilden, zu der der Versorgungseinsatz für den Arbeitsraum drehbar und abgedichtet angeordnet ist, so dass der Versorgungseinsatz lagefest, also feststehend angeordnet sein kann und dadurch in der hydraulischen Zuführung auf den Versorgungseinsatz auch feststehende Anschlüsse oder Leitungsverbindungen vorgesehen sein können.

So beispielsweise bei in die Nabe eines Lüfterrades integrierten Stellvorrichtungen mit umfangsseitig in der Nabe gelagerten, radialen Lüfterflügeln, die über die Stellvorrichtung als Stellantrieb in ihrem Anstellwinkel einstellbar sind. Hierbei kann die Nabe axial und drehfest mit einem zentralen Drehantrieb verbunden sein, so beispielsweise mit der Kurbelwelle einer Brennkraftmaschine, oder als axialer Stelltrieb für ein Getriebe mit axial gegeneinander zu verstellenden Getriebegliedern eingesetzt werden, so insbesondere für einen Varioantrieb mit axial gegeneinander in ihrem Abstand einzustellenden Kegelrollen oder axial gegeneinander zu verstellenden konischen Riemenscheiben, wie beispielsweise bei CVT-Getrieben. Bei einem solchen Einsatz ist zweckmäßigerweise die Stellvorrichtung über ihren Napfkörper drehbar und axial lagefest zu einer Tragstruktur abgestützt, so dass der axial verstellbare Ringkolben des jeweils axial zu verstellende Teil beaufschlagt.

Somit ergibt sich durch die Erfindung eine hydraulische Stellvorrichtung mit einem volumenveränderlichen Arbeitsraum, bei dem zumindest zwei Leckagepfade gemeinsam einem Begrenzungselement zum Arbeitsraum zugeordnet und zumindest teilweise durch dieses Begrenzungselement begrenzt sind, und in deren einem, längs einer axialen Führungsbahn dieses Begrenzungselementes verlaufenden Leckagepfad eine Dichtungsanordnung vorgesehen ist, die über einen im Begrenzungselement verlaufenden Übergangskanal mit dem anderen Leckagepfad verbunden ist und die als auf den Arbeitsraum rückfördernde Dichtungsanordnung ausgebildet ist.

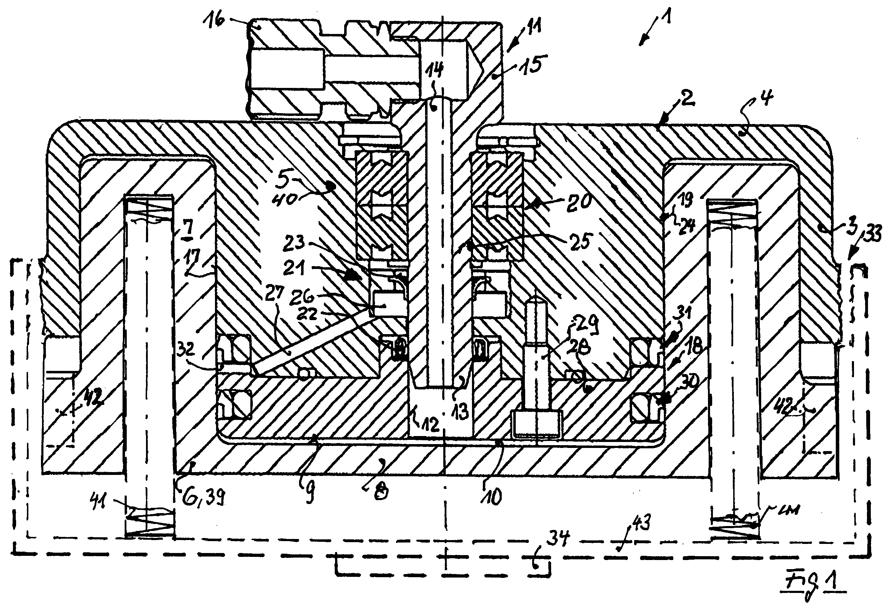

Weitere Einzelheiten und Merkmale der Erfindung ergeben sich aus den Ansprüchen und der Beschreibung, in der nachfolgend die erfindungsgemäße Stellvorrichtung in ihrem konstruktiven Aufbau prinzipiell erläutert ist, wobei
- Fig. 1: den Grundaufbau einer Stellvorrichtung zeigt, wie diese beispielsweise in Verbindung mit einem Lüfterrad einzusetzen ist, dessen Nabe die Stellvorrichtung aufnimmt, über die zur Nabe des Lüfterrades radiale Lüfterflügel in ihrem Anstellwinkel einstellbar sind, und wobei

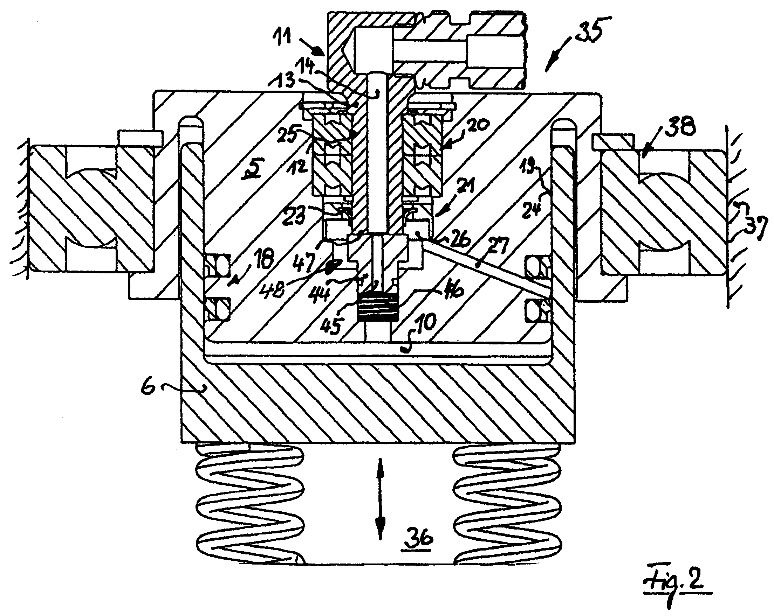

- Fig. 2: bezogen auf eine Stellvorrichtung, die im Grundaufbau jener gemäß Fig. 1 entspricht, deren Abwandlung im Hinblick auf einen Einsatz als axiales Stellglied zeigt, das zum Beispiel zur axialen Verstellung einer der konischen Riemenscheiben eines stufenlosen Riemengetriebes oder der Kegelrollen eines Kegelrollengetriebes in ihrer Abstandslage zueinander einzusetzen ist.

Die in den Figuren in ihrem grundsätzlichen Aufbau veranschaulichte Stellvorrichtung 1 weist einen Napfkörper 2 auf, der zentral zu seiner ringförmigen Napfwand 3 aufragend vom Napfboden 4 einen Dom 5 aufweist. Zum Napfkörper 2 konzentrisch und axial gegenüberliegend ist ein topfförmiger Ringkolben 6 vorgesehen, dessen Topfwand mit 7 und dessen Topfboden mit 8 bezeichnet ist. Der Topfboden 8 liegt der Stirnwand 9 des Domes 5 axial gegenüber. Zwischen dem Topfboden 8 und der Stirnwand 9 liegt ein Arbeitsraum 10, der hydraulisch beaufschlagbar ist, und in Abhängigkeit von dessen hydraulischer Beaufschlagung der Ringkolben 6 gegenüber dem Napfkörper 2 axial verstellbar ist, wobei der Ringkolben 6, wie in Fig. 1 gezeigt, auf seine gegen den Dom 5 eingefahrene Lage federnd belastet ist. Eine entsprechende Federabstützung ist beispielsweise mit einer Anzahl von Schraubenfedern 41 zu realisieren.

Die hydraulische Beaufschlagung des Arbeitsraumes 10 erfolgt über einen Versorgungseinsatz 11, der in einer zentralen Axialbohrung 12 des Domes 5 angeordnet ist und der auf den Arbeitsraum 10 ausmündet. Der Versorgungseinsatz 11 weist einen von einer axialen Versorgungsbohrung 14 durchsetzten Hals 13 auf, der in einem über den Napfboden 4 auskragenden Anschlussstück 15 ausläuft, über das, wie dargestellt, bevorzugt im Wesentlichen parallel zum Napfboden 4 eine Anschlussleitung 16 mit dem Versorgungseinsatz 11 verbunden ist.

Zum Arbeitsraum 10 bilden der topfförmige Ringkolben 6 mit dem Topfboden 8 und der in diesen einlaufenden Topfwand 7 das Begrenzungselement 39 sowie der Dom 5 mit seiner Stirnwand 9 und der in diese einlaufenden Umfangswand 17 das Begrenzungselement 40. Den Begrenzungselementen 39, 40 ist im axialen Nahbereich zum Arbeitsraum 10 eine Dichtungsanordnung 18 zugeordnet ist, die die durch die Umfangswand 17 einerseits und die Topfwand 7 andererseits gebildete Führungsbahn 19 gegen den Arbeitsraum 10 abdichtet. Längs der Führungsbahn 19 ergibt sich in Abhängigkeit von der Dichtungswirkung der Dichtungsanordnung 18 ein möglicher (erster) Leckpfad 24.

Auch der Hals 13 des Versorgungseinsatzes 11 ist gegen die Axialbohrung 12 abgedichtet, wobei hier im Hinblick auf die drehbare Abstützung des Versorgungseinsatzes 11 gegen den Napfkörper 2 über eine Lageranordnung 20 im axialen Übergang zwischen dieser Lageranordnung 20 und dem Auslauf des Halses 13 in Richtung auf den Arbeitsraum 10 eine Dichtungsvorrichtung 21 vorgesehen ist, die durch zwei axial beabstandete Dichtungselemente 22, 23 gebildet ist. In Abhängigkeit von der Wirksamkeit der Dichtungsanordnung 21 besteht die Gefahr von Leckagen auch zwischen der Axialbohrung 12 und dem in dieser aufgenommenen Hals 13 des Versorgungseinsatzes 11 als Begrenzungen eines (zweiten) Leckpfades 25, der gegenüberliegend zum Arbeitsraum 10 auf die Umgebung ausmündet.

Zwischen den axial beabstandeten Dichtungselementen 22 und 23 der Dichtungsvorrichtung 21 ist ein Leckagesammelraum 26 gebildet, der über zumindest einen Übergangskanal 27 mit der Dichtungsanordnung 18 verbunden ist, die als eine auf den Arbeitsraum 10 rückfördernde Dichtungsanordnung 18 ausgebildet ist, so dass eventuelle Leckagemengen aus dem Leckagesammelraum 26 der rückfördernden Dichtungsanordnung 18 zugeführt werden, sei es aufgrund einer saugenden Wirkung dieser Dichtungsanordnung 18, und/oder auch bei im Wesentlichen radialem Verlauf des Übergangskanales 27 aufgrund sich ergebender Fliehkräfte bei Drehung des Napfkörpers 2 zusammen mit dem Ringkolben 6 als den Arbeitsraum 10 umfassender Dreheinheit.

Der Dom 5 ist, wie in der Zeichnung schematisiert gezeigt, axial als gebaute Einheit gestaltet, bei der der Dom 5 benachbart zum Arbeitsraum 10 durch eine Endplatte 28 gebildet ist, die beispielsweise durch eine angedeutete Verschraubung 29 mit dem vom Napfboden 4 aufragenden Domteil verbunden ist. Die gebaute Ausführung des Domes 5 ist im Hinblick auf die Einbringung des Übergangskanals 27 vorteilhaft und erleichtert die Aufteilung der der Dichtungsvorrichtung 21 zugehörigen Dichtungselemente 22, 23 und der durch Stufendichtungen 30, 31 gebildeten Dichtungsanordnung 18 auf die beiden Domteile, die aus funktionellen Gründen zweckmäßig ist und konstruktiv deren Anordnung ebenso erleichtert wie deren Montage.

Rückfördernde Dichtungsanordnungen 18 lassen sich mit unterschiedlichen bekannten Dichtungsgestaltungen verwirklichen, so unter anderem mit bekannten Rechteck- oder Stufendichtungen, insbesondere PTFE-Rechteck- oder Stufendichtungen mit hinterlegtem O-Ring. Eine bevorzugte Ausgestaltung für solch eine rückfördernde, im Rahmen der erfindungsgemäßen Verwendung eingesetzte Dichtungsanordnung 18 ist die in den Ausführungsbeispielen gezeigte Ausbildung als sogenannte Tandem-Dichtung.

Diese weist zwei axial beabstandet in Ringnuten des Domes 5 angeordnete Stufendichtungen 30 und 31 auf, zwischen denen ein Zwischendichtungsraum als Leckagesammelraum 32 verbleibt und die in gleicher Orientierung angeordnet sind. Hierzu weisen die beiden Stufendichtungen 30 und 31 jeweils einen radial äußeren Stufenring auf, der radial nach innen über einen O-Ring elastisch abgestützt ist und nach axial innen, das heißt in Richtung auf den Arbeitsraum 10, radial außen in einer Stufe zurückgenommen ist, so dass die Dichtkante des Stufenrings in dessen axial mittlerem Bereich liegt. Ausgehend von der Dichtkante, die auch angefasst ausgebildet sein kann, verläuft der Stufenring umfangsseitig nach axial außen bevorzugt leicht kegelig und nach radial innen geneigt. Solche Stufendichtungen sind in unterschiedlichen Bauformen im Markt und werden beispielsweise als sogenannte "Stepseal®-Dichtungen von der Firma Trelleborg angeboten.

Vorteil einer solchen Dichtungsanordnung 18 ist, dass die axial äußere Dichtung - hier Stufendichtung 31 - die dynamische Leckage der axial inneren Dichtung - hier Stufendichtung 30 - auffängt, so dass sich im Zwischenraum - hier Leckagesammelraum 32 - eine gewisse Speicherung ergibt, über die in Abhängigkeit von wechselnden Betriebszuständen schwankende Leckagemengen ausgleichend abgefangen werden können, so dass über längere Betriebszeiten betrachtet für die axial innere Dichtung (Stufendichtung 30) eine Auslegung auf eine mittlere Rückförderkapazität, also Rückpumpmenge, möglich ist. Grundsätzlich ist es auch möglich, anstelle einer rückfördernden, axial äußeren Dichtung (Stufendichtung 31) eine lediglich sperrende Dichtung, oder auch nur einen Abstreifer vorzusehen, wobei für reibend beanspruchte Dichtungsteile bevorzugt PTFE als Material in Frage kommt.

Fig. 1 veranschaulicht durch eine strichlierte Ergänzung zur Stellvorrichtung 1 deren Integration in die Nabe 33 eines Lüfterrades mit radialen, in ihrem Anstellwinkel über die Stellvorrichtung 1 verstellbaren Lüfterflügeln. Ein diesbezüglicher Aufbau ist grundsätzlich insbesondere aus den Fig. 2 bis 4 der DE 10 2004 035 631 A1 ersichtlich. Übertragen auf die Stellvorrichtung 1 gemäß Fig. 1 ergibt sich daraus, dass der Ringkolben 6 im radial äußeren Umfangsbereich, schematisiert in Fig. 1 durch die Strichpunktierung 42 angedeutet, sich in seiner Stellrichtung, also axial erstreckende Zahnstangen trägt, in die ein auf dem radial inneren Ende des jeweiligen, in der Nabe 33 gelagerten Lüfterflügels angeordnetes Ritzel eingreift. Angedeutet ist in Fig. 1 weiter, dass die Nabe 33, die in einem Teilbereich durch den Napfkörper 2 gebildet ist und zu diesem ergänzend einen axial gegenüberliegenden Gehäuseteil 43 aufweist, axial gegenüberliegend zum Versorgungseinsatz 11 mit einem Befestigungsflansch 34 versehen ist, über den das Lüfterrad mit einem jeweiligen Drehantrieb zu verbinden ist, der beispielsweise durch die Kurbelwelle einer Brennkraftmaschine gebildet sein kann.

Während Fig. 1 den in die Nabe 33 eines Lüfterrades integrierten Einsatz der Stellvorrichtung 1 veranschaulicht, zeigt Fig. 2 für eine im Aufbau prinzipiell gleich gestaltete Stellvorrichtung 35 eine Anwendung, bei der die Stellvorrichtung 35 unmittelbar eine axial zu verstellende Arbeitseinheit 36 über den Ringkolben 6 beaufschlagt. Als eine solche Arbeitseinheit 36 ist beispielsweise und bevorzugt ein bekannter Riemenscheiben- oder Kegelrollenantrieb vorgesehen, von dessen axial gegeneinander in ihrem Abstand zur Veränderung des Übersetzungsverhältnisses zu verstellenden Riemenscheiben oder Kegelrollen eine, insbesondere unmittelbar, über den Ringkolben 6 beaufschlagt ist. Entsprechend bildet die Stellvorrichtung 35 bei einer solchen Ausgestaltung eine mit der jeweiligen Riemenscheiben oder Kegelrolle mitdrehende Einheit, die über die Riemenscheibe oder Kegelrolle gegebenenfalls mitgetragen ist oder, wie in der Darstellung gemäß Fig. 2 veranschaulicht, auch als Träger der Riemenscheibe oder Kegelrolle ihrerseits drehbar zu einer hier nicht dargestellten Tragstruktur, bei 37 angedeutet, abgestützt ist. Diese Abstützung zur Tragstruktur 37 ist veranschaulicht durch ein Lager 38, das seinerseits außenseitig zur Napfwand 3 des Napfkörpers 2 festgelegt ist. Der Aufbau der Stellvorrichtung 35 entspricht ansonsten im Wesentlichen, wie bereits gesagt, dem für die Darstellung gemäß Fig. 1 ausführlich erläuterten Aufbau, weswegen in Fig. 1 und 2 bezogen auf die jeweilige Stellvorrichtung 1 bzw. 35 auch gleiche Bezugszeichen Verwendung finden.

Abweichend von der Ausgestaltung gemäß Fig. 1 stützt sich bei der Gestaltung gemäß Fig. 2 der Hals 13 des Versorgungseinsatzes 11 stirnseitig dichtend, insbesondere über eine Gleitringdichtung im Bereich des Leckagesammelraumes 26 der Dichtungsvorrichtung 21 gegen ein in der Axialbohrung 12 drehfest, dichtend und axial federnd abgestütztes Übergangsstück 44 ab, das in Verlängerung der Versorgungsbohrung 14 eine auf den Arbeitsraum 10 auslaufende Durchgangsbohrung 45 aufweist. Durch die zur Axialbohrung 12 dichtende und drehfeste Anordnung des Übergangsstückes 44 wird bei der Ausgestaltung gemäß Fig. 2 funktional dem Dichtungselement 22 der Dichtungsvorrichtung 21 gemäß Fig. 1 entsprechend, ein den Leckagesammelraum 28 gegen den Arbeitsraum 10 abgrenzendes Dichtungselement 48 gebildet. Bei über eine Feder 46 axial gegen die Stirnseite des Halses 13 angelegtem Übergangsstück 44 liegt die Anlagefläche als Dichtungsfläche zwischen den Dichtungselementen 22 und 48 und ist das Übergangsstück 44 mit dem Dom 5 relativ zum Versorgungseinsatz 11 drehbar.

Gerade der in Verbindung mit der Darstellung gemäß Fig. 2 erläuterte Einsatzzweck macht deutlich, dass die erfindungsgemäße Lösung für Stellvorrichtungen 1 bzw. 35 einen sehr kompakten Aufbau ermöglicht, mit dem sich auch bei kleiner Dimensionierung große Stellkräfte realisieren lassen, ohne dass durch Leckagen dieser Stellvorrichtung 1 Verunreinigungen zu befürchten wären. Insbesondere ist durch die erfindungsgemäße Ausgestaltung, ungeachtet der Drehdurchführung für die hydraulische Arbeitsflüssigkeit über den Versorgungseinsatz 11, mit herkömmlichen Dichtungsmitteln bezüglich der Drehdurchführung eine leckagesichere Anordnung gewährleistet, da - wie in Fig. 1 gezeigt - eine etwa über das innere, als Radialdichtung ausgebildete Dichtungselement 22 der Dichtungsvorrichtung 21 nicht abgefangene Leckagemenge auf den nach außen über das Dichtungselement 23 - hier als Abstreifer gestaltet - abgegrenzten Leckagesammelraum 26 gelangt, aus dem Leckagen über den Übergangskanal 27 dem Sammelraum 32 der Dichtungsanordnung 18 zugeführt und über diese aufgrund ihrer Pumpwirkung wieder in das Hydrauliksystem eingespeist werden.

Eine entsprechende Funktionalität ist auch bei der Ausgestaltung der Dichtungsvorrichtung 21 gemäß Fig. 2 erreicht, wobei, anstelle der radialen Abdichtung zwischen dem Hals 13 und der diesen drehbar aufnehmenden Axialbohrung 12 gemäß Fig. 1, bei zur Axialbohrung 12 drehfestem Übergangsstück 44 eine stirnseitige Abdichtung 47 insbesondere in Form einer Gleitringdichtung zwischen dem auslaufseitigen Ende des Halses 13 und der axial gegenüberliegenden Stirnseite des in die Axialbohrung 12 eingesetzten Übergangsstückes 44 vorgesehen ist. Dadurch ist für die Dichtungsvorrichtung 21 zudem eine Ausgestaltung geschaffen, bei der die Dichtgrenze im Durchmesser unabhängig vom Durchmesser des Halses 13 ist und mit sehr kleinem Durchmesser realisiert werden kann.

Die Erfindung zeigt insbesondere für Stellvorrichtungen 1, 35 eine Lösung auf, wie für diese ungeachtet zumindest zweier möglicher Leckpfade - nämlich des längs der Führungsbahn 19 verlaufenden Leckpfades 24 und des längs des Halses 13 des Versorgungseinsatzes 11 in der Axialbohrung 12 verlaufenden Leckpfades 25 - mit einfachen und technisch gut beherrschbaren Mitteln ein praktisch leckagefreier Betrieb erreicht wird, der den Einsatzbereich hydraulischer Stellvorrichtungen auf Anwendungsgebiete erweitert, in denen durch Leckagen bedingte Vernebelungen mit Hydrauliköl nicht nur optisch, sondern auch funktional einen Einsatz verhindern würden.

Durch die Erfindung wird somit eine hydraulische Stellvorrichtung 1, 35 mit zumindest zwei Leckpfaden 24, 25 geschaffen, die über einen Übergangskanal 27 verbunden sind, wobei in einem der Leckpfade 24, 25 abgrenzend zu einem Arbeitsraum 10 der Stellvorrichtung 1, 35 eine auf den Arbeitsraum 10 rückfördernde Dichtungsanordnung 18 vorgesehen ist.

## Patentansprüche

1. Hydraulische Stellvorrichtung (1, 35) mit einem Hydraulikkreislauf, einem mit dem Hydraulikkreislauf verbundenen, volumenveränderlichen Arbeitsraum (10) und zumindest zwei Leckpfaden (24, 25), von denen ein erster Leckpfad (24) zwischen Begrenzungselementen (39, 40) zum Arbeitsraum (10) und über eine in diesem Leckpfad (24) liegende Dichtungsanordnung (18) mit längs des Leckpfades (24) beabstandeten, zwischen den Dichtungen (30, 31) liegendem Leckagesammelraum (32) verläuft, mit einem die beiden Leckpfade (24, 25) verbindenden, an den ersten Leckpfad (24) über den zwischen den Dichtungen (30, 31) liegenden Leckagesammelraum (32) angeschlossenen Übergangskanal (27) sowie mit einer die Leckage auf den Arbeitsraum (10) rückführenden Fördereinrichtung,
**dadurch gekennzeichnet,**
**dass** die Begrenzungselemente (39, 40) axial gegeneinander verschieblich sind und durch einen Napfkörper (2) mit zentralem Dom und einen diesen übergreifenden, topfförmigen Ringkolben (6) gebildet sind,
**dass** der volumenveränderliche Arbeitsraum (10) axial zwischen dem zentralen Dom (5) und dem zu diesem übergreifenden, topfförmigen Ringkolben (6) liegt, und
**dass** die im ersten Leckpfad (24) liegende Dichtungsanordnung (18), in Abhängigkeit von der Richtung der Verschiebung der Begrenzungselemente (39, 40) gegeneinander arbeitend, die auf den Arbeitsraum (10) rückführende Fördereinrichtung bildet.

2. Hydraulische Stellvorrichtung nach Anspruch 1,
**dadurch gekennzeichnet,**
**dass** von den Leckpfaden (24, 25) ein zweiter, mit dem Arbeitsraum (10) in Verbindung stehender Leckpfad (25) zwischen dem den Übergangskanal (27) aufnehmenden Napfkörper (2) und einer in dem Napfkörper (2) ausgebildeten Führung für einen auf den Arbeitsraum (10) ausmündenden Versorgungseinsatz (11) verläuft.

3. Hydraulische Stellvorrichtung nach Anspruch 2,
**dadurch gekennzeichnet,**
**dass** der Versorgungseinsatz (11) zum aufnehmenden Napfkörper(2) drehbar angeordnet ist.

4. Hydraulische Stellvorrichtung nach einem der vorhergehenden Ansprüche,
**dadurch gekennzeichnet,**
**dass** der Napfkörper (2) und der Ringkolben (6) mit dem aufgenommenen Arbeitsraum (10) eine zur wechselseitigen axialen Verschieberichtung von Napfkörper (2) und Ringkolben (6) koaxiale Dreheinheit bilden, zu der der Versorgungseinsatz (11) drehbar und abgedichtet angeordnet ist.

5. Hydraulische Stellvorrichtung nach Anspruch 4,
**dadurch gekennzeichnet,**
**dass** der Versorgungseinsatz (11) in einer zentralen Axialbohrung (12) des Domes (5) des Napfkörpers (2) drehbar aufgenommen ist.

6. Hydraulische Stellvorrichtung nach Anspruch 4 oder 5,
**dadurch gekennzeichnet,**
**dass** der Napfkörper (2) Bestandteil eines Mantels einer Nabe (33) ist.

7. Hydraulische Stellvorrichtung nach Anspruch 6,
**dadurch gekennzeichnet,**
**dass** die Nabe (33) axial- und drehfest mit einem zentralen Drehantrieb verbunden und Bestandteil eines Lüfterrades ist, das mit in der Nabe (33) umfangsseitig gelagerten, radialen und über die Stellvorrichtung (1) als Stellantrieb im Anstellwinkel einstellbaren Lüfterflügeln versehen ist.

8. Hydraulische Stellvorrichtung nach Anspruch 4 oder 5,
**dadurch gekennzeichnet,**
**dass** die Stellvorrichtung (35) über ihren Napfkörper (2) drehbar und axial lagefest zu einer Tragstruktur (37) abgestützt ist und dass der zum Napfkörper (2) axial verstellbare Ringkolben (6) das Stellglied einer axial zu beaufschlagenden Arbeitseinheit (36) bildet.

9. Hydraulische Stellvorrichtung nach Anspruch 8,
**dadurch gekennzeichnet,**
**dass** als axial zu verstellende Arbeitseinheit (36) ein Kegelscheibentrieb mit axial gegeneinander in ihrem Abstand über die Stellvorrichtung einzustellenden Kegelscheiben vorgesehen ist.

## Claims

1. Hydraulic actuating apparatus (1, 35) having a hydraulic circuit, a variable-volume working space (10) which is connected to the hydraulic circuit, and at least two leakage paths (24, 25), of which a first leakage path (24) runs between bounding elements (39, 40) to the working space (10) and via a seal arrangement (18) which lies in said leakage path (24) with a leakage collecting space (32) which is spaced apart along the leakage path (24) and lies between the seals (30, 31), having a crossover duct (27) which links the two leakage paths (24, 25) and is connected to the first leakage path (24) via the leakage collecting space (32) which lies between the seals (30, 31), and having a delivery device which returns the leakage to the working space (10), **characterized in that** the bounding elements (39, 40) can be displaced axially with respect to one another and are formed by a bowl body (2) with a central dome and by a cup-shaped annular piston (6) which engages over said dome, **in that** the variable-volume working space (10) lies axially between the central dome (5) and the cup-shaped annular piston (6) which engages over with respect to said dome (5), and **in that** the seal arrangement (18) which lies in the first leakage path (24) forms the delivery device which returns to the working space (10), such that it operates in a manner which is dependent on the direction of the displacement of the bounding elements (39, 40) with respect to one another.

2. Hydraulic actuating apparatus according to Claim 1, **characterized in that**, of the leakage paths (24, 25), a second leakage path (25) which is connected to the working space (10) runs between the bowl body (2) which receives the crossover duct (27) and a guide which is configured in the bowl body (2) for a supplying insert (11) which opens onto the working space (10).

3. Hydraulic actuating apparatus according to Claim 2, **characterized in that** the supply insert (11) is arranged rotatably with respect to the receiving bowl body (2).

4. Hydraulic actuating apparatus according to one of the preceding claims, **characterized in that** the bowl body (2) and the annular piston (6) with the received working space (10) form a rotational unit which is coaxial with respect to the alternating axial displacement direction of the bowl body (2) and the annular piston (6), with respect to which rotational unit the supply insert (11) is arranged in a rotatable and sealed manner.

5. Hydraulic actuating apparatus according to Claim 4, **characterized in that** the supply insert (11) is received rotatably in a central axial bore (12) of the dome (5) of the bowl body (2).

6. Hydraulic actuating apparatus according to Claim 4 or 5, **characterized in that** the bowl body (2) is a constituent part of a shell of a hub (33).

7. Hydraulic actuating apparatus according to Claim 6, **characterized in that** the hub (33) is connected fixedly to a central rotational drive axially and so as to rotate with it, and is a constituent part of a fan wheel which is provided with radial fan blades which are mounted on the circumferential side in the hub (33) and can have their angle of attack set via the actuating apparatus (1) as actuating drive.

8. Hydraulic actuating apparatus according to Claim 4 or 5, **characterized in that** the actuating apparatus (35) is supported such that it can be rotated via its bowl body (2) and is positionally fixed axially with respect to a load-bearing structure (37), and **in that** the annular piston (6) which can be adjusted axially with respect to the bowl body (2) forms the actuating element of a working unit (36) to be loaded axially.

9. Hydraulic actuating apparatus according to Claim 8, **characterized in that** a cone pulley drive with cone pulleys which can have their spacing set axially with respect to one another via the actuating apparatus is provided as a working unit (36) which can be adjusted axially.

## Revendications

1. Dispositif de réglage hydraulique (1, 35) comprenant un circuit hydraulique, un espace de travail (10) de volume variable, connecté au circuit hydraulique et au moins deux chemins de fuite (24, 25), dont un premier chemin de fuite (24) s'étend entre des éléments de limitation (39, 40) vers l'espace de travail (10) et par le biais d'un agencement d'étanchéité (18) situé dans ce chemin de fuite (24) avec un espace de collecte de fuite (32) espacé le long du chemin de fuite (24), situé entre les joints d'étanchéité (30, 31), avec un canal de transition (27) reliant les deux chemins de fuite (24, 25), raccordé au premier chemin de fuite (24) par le biais de l'espace de collecte de fuite (32) situé entre les joints d'étanchéité (30, 31) et avec un dispositif de refoulement ramenant la fuite à l'espace de travail (10),
**caractérisé en ce que**
les éléments de limitation (39, 40) peuvent être déplacés axialement l'un par rapport à l'autre et sont formés par un corps de coupelle (2) avec un dôme central et un piston annulaire (6) en forme de pot venant en prise par-dessus celui-ci, **en ce que** l'espace de travail (10) de volume variable est situé axialement entre le dôme central (5) et le piston annulaire (6) en forme de pot venant en prise par-dessus celui-ci, et **en ce que** l'agencement d'étanchéité (18) situé dans le premier chemin de fuite (24), fonctionnant en fonction du sens de déplacement des éléments de limitation l'un par rapport à l'autre (39, 40), forme le dispositif de refoulement ramenant vers l'espace de travail (10).

2. Dispositif de réglage hydraulique selon la revendication 1,
**caractérisé en ce que**
parmi les chemins de fuite (24, 25), un deuxième chemin de fuite (25) en liaison avec l'espace de travail (10) s'étend entre le corps de coupelle (2) recevant le canal de transition (27) et un guidage réalisé dans le corps de coupelle (2) pour un insert d'alimentation (11) débouchant sur l'espace de travail (10).

3. Dispositif de réglage hydraulique selon la revendication 2,
**caractérisé en ce que**
l'insert d'alimentation (11) est disposé de manière à pouvoir tourner par rapport au corps de coupelle de réception (2).

4. Dispositif de réglage hydraulique selon l'une quelconque des revendications précédentes,
**caractérisé en ce que**
le corps de coupelle (2) et le piston annulaire (6) forment avec l'espace de travail reçu (10) une unité rotative coaxiale par rapport à la direction de déplacement axiale réciproque du corps de coupelle (2) et du piston annulaire (6), par rapport à laquelle l'insert d'alimentation (11) est disposé de manière étanche et de manière à pouvoir tourner.

5. Dispositif de réglage hydraulique selon la revendication 4,
**caractérisé en ce que**
l'insert d'alimentation (11) est reçu de manière à pouvoir tourner dans un alésage axial central (12) du dôme (5) du corps de coupelle (2).

6. Dispositif de réglage hydraulique selon la revendication 4 ou 5,
**caractérisé en ce que**
le corps de coupelle (2) fait partie d'une enveloppe d'un moyeu (33).

7. Dispositif de réglage hydraulique selon la revendication 6,
**caractérisé en ce que**
le moyeu (33) est connecté axialement et de manière solidaire en rotation à un entraînement en rotation central et fait partie d'un composant d'une roue de ventilateur qui est pourvue de pales de ventilateur radiales supportées du côté de la périphérie dans le moyeu (33), et dont l'angle d'attaque peut être ajusté par le biais du dispositif de réglage (1) en tant qu'entraînement de réglage.

8. Dispositif de réglage hydraulique selon la revendication 4 ou 5,
**caractérisé en ce que**
le dispositif de réglage (35) est supporté de manière à pouvoir tourner par le biais de son corps de coupelle (2) et de manière fixée axialement en position par rapport à une structure porteuse (37) et **en ce que** le piston annulaire (6) réglable axialement par rapport au corps de coupelle (2) forme l'organe de réglage d'une unité de travail (36) devant être sollicitée axialement.

9. Dispositif de réglage hydraulique selon la revendication 8,
**caractérisé en ce**
**qu'**un entraînement à courroie conique, en tant qu'unité de travail (36) devant être réglée axialement, est pourvu de poulies coniques dont la distance axialement l'une par rapport à l'autre doit être ajustée par le biais du dispositif de réglage.
